# EUROPEAN PATENT SPECIFICATION

(11) **EP 3 404 744 B1**
(45) Date of publication and mention of the grant of the patent: **09.03.2022**
(21) Application number: 18171171.4
(22) Date of filing: 08.05.2018
(51) Int. Cl.: H01M 10/0525, H01M 4/133, H01M 4/587, H01M 10/0569

(54) **NEGATIVE ELECTRODE ACTIVE MATERIAL AND NONAQUEOUS SECONDARY BATTERY**
NEGATIVELEKTRODENAKTIVMATERIAL UND WASSERFREIE SEKUNDÄRBATTERIE
MATÉRIAU ACTIF D'ÉLECTRODE NÉGATIVE ET BATTERIE SECONDAIRE NON AQUEUSE

(30) Priority: 16.05.2017 JP 2017097705
(43) Date of publication of application: 21.11.2018
(73) Proprietor: Panasonic Intellectual Property Management Co., Ltd., Osaka-shi, Osaka 540-6207 (JP)
(72) Inventor: HOJO, Nobuhiko, Osaka-shi, Osaka 540-6207 (JP); NAKATSUTSUMI, Takayuki, Osaka-shi, Osaka 540-6207 (JP); OKANO, Tetsuyuki, Osaka-shi, Osaka 540-6207 (JP); MAENISHI, Mayumi, Osaka-shi, Osaka 540-6207 (JP); TAKAHATA, Masahiro, Osaka-shi, Osaka 540-6207 (JP)
(74) Representative: Grünecker Patent- und Rechtsanwälte PartG mbB

(56) References cited:
- WO-A1-02/089235
- WO-A1-2005/011028
- JP-A- 2007 122 975
- US-A1- 2002 001 752

## Description

### BACKGROUND

### 1. Technical Field

The present disclosure relates to a nonaqueous secondary battery and a negative electrode active material to be used for the battery.

### 2. Description of the Related Art

As negative electrode materials of nonaqueous secondary batteries represented by a lithium ion secondary battery, boron-containing carbon materials have been studied (for example, see Japanese Unexamined Patent Application Publication Nos. 7-73898 and 9-63585).

JP-2007/122975 A discloses a negative electrode active material for a nonaqueous secondary battery, comprising graphite containing boron in an amount of from 0.01 to 0.35 mass%.

WO 02/089235 A1 relates to carbonaceous material for a nonaqueous electrolytic secondary battery and a battery comprising same. The battery comprises a negative electrode comprising graphite including boron in an amount of 0.01 to 3 wt%.

### SUMMARY

There is a demand for a negative electrode active material that can suppress a side reaction and can achieve a battery with high reliability.

The invention is defined in the appended claims.

In one general aspect, the techniques disclosed here feature a negative electrode active material, for a nonaqueous secondary battery, including graphite containing boron. The graphite has an average discharge potential of 0.16 V or more and 0.2 V or less, based on Li. The graphite contains boron in an amount of greater than 0.03 mass% and not greater than 1 mass%. The graphite has an interlayer distance of 3.348 angstrom or more and 3.352 angstrom or less.

It should be noted that general or specific embodiments may be implemented as an element, a device, an apparatus, a method, or any selective combination thereof.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### BRIEF DESCRIPTION OF THE DRAWINGS

Fig. 1 is a partially cut plan view schematically illustrating the structure of a nonaqueous secondary battery according to an embodiment of the present disclosure;
Fig. 2 is a cross-sectional view of the nonaqueous secondary battery taken along the line II-II in Fig. 1;
Fig. 3A is a diagram illustrating a method of producing a negative electrode for performance evaluation;
Fig. 3B is a diagram illustrating the method of producing a negative electrode for performance evaluation;
Fig. 3C is a diagram illustrating the method of producing a negative electrode for performance evaluation; and
Fig. 4 is a graph showing a relationship between the average discharge potential based on Li and the side reaction decreasing rate of the negative electrode active materials, for nonaqueous secondary battery, of the Examples and Comparative Examples.

### DETAILED DESCRIPTION

Embodiments of the present disclosure will now be described in detail. The invention is defined in the appended claims.

A lithium ion secondary battery using graphite in the negative electrode can occlude a large amount of lithium in the graphite skeleton and can reversibly release the lithium and therefore can achieve a high discharge capacity density. However, graphite has a problem of readily causing a side reaction with an electrolyte solution. The present inventors have diligently studied and, as a result, have found that a nonaqueous secondary battery that can suppress the side reaction with an electrolyte solution and has high reliability can be achieved by using specific graphite containing boron as a negative electrode active material and arrived at the present disclosure. The reasons for that the nonaqueous secondary battery negative electrode active material including graphite containing boron shows high reliability are not necessarily clear, and the followings are the views of the inventors. However, the present disclosure is not limited to the following views.

The nonaqueous secondary battery negative electrode active material according to an embodiment of the present disclosure includes graphite containing boron (hereinafter, also referred to as "B-containing graphite"). The B-containing graphite has an average discharge potential of 0.16 V or more and 0.2 V or less, based on Li. It was demonstrated that the use of such B-containing graphite as the negative electrode active material can provide a secondary battery having high reliability, specifically, having excellent storage durability.

The factors that the nonaqueous secondary battery including the above-described B-containing graphite as the negative electrode active material has high reliability are not necessarily clear, but can be conceived as follows. In the followings, a process of releasing lithium ions from a negative electrode is defined as discharge, and a process of occluding lithium ions into a negative electrode is defined as charge.

In a negative electrode including graphite, a side reaction readily occurs. The reasons for this are believed that graphite has a low charge potential and a low discharge potential and therefore has a strong reducing power to readily cause a side reaction of reducing and decomposing the nonaqueous electrolyte solution on the negative electrode surface.

In contrast, in an embodiment of the present disclosure, the graphite skeleton includes boron atoms, and thereby the charge and discharge potentials of the graphite are increased. As a result, the reducing power of the negative electrode, serving as a driving force for the side reaction with the electrolyte solution, is decreased to suppress the side reaction with the electrolyte solution, leading to an improvement in storage durability.

In this occasion, the effect of suppressing the side reaction with the electrolyte solution by the increase in the discharge potential of the B-containing graphite has a threshold, and the use of B-containing graphite having an average discharge potential within a certain range as the negative electrode active material resulted in a notable improvement in storage durability.

That is, the present inventors have found that the storage durability is significantly improved by controlling the average discharge potential of B-containing graphite based on Li to 0.16 V or more and 0.2 V or less, and arrived at the present disclosure. A further significant improvement in storage durability is achieved by controlling the average discharge potential more desirably to 0.167 V or more and 0.2 V or less and further desirably to 0.17 V or more and 0.2 V or less. A higher upper limit of the average discharge potential is desirable from the viewpoint of suppressing the side reaction with the electrolyte solution, and it is believed there is no upper limit. However, the discharge voltage of a battery using B-containing graphite as the negative electrode active material decreases with an increase in the average discharge potential. Accordingly, from the viewpoint of the discharge voltage of a battery, the average discharge potential is desirably controlled to 0.2 V or less based on Li.

The average discharge potential based on Li can be determined by, for example, producing a model battery (for example, half-cell) including a negative electrode including the negative electrode active material of the present disclosure and a lithium metal as a counter electrode and dividing the total quantity of the discharge electric energy by the total quantity of discharge electricity in one or multiple cycles of charge and discharge.

The boron content of the B-containing graphite is 0.03 mass% or more and 1 mass% or less. A negative electrode active material having an average discharge potential of 0.16 V or more and 0.2 V or less based on Li can thus be easily provided.

By restricting the rate of boron in graphite to 1 mass% or less, generation of by-products not participating in occlusion and release of lithium ions are suppressed, and a high discharge capacity density can be obtained. In addition, by controlling the rate of boron in graphite to 0.03 mass% or more, a sufficient effect of suppressing a side reaction can be obtained.

More desirably, the boron content of B-containing graphite is controlled to 0.29 mass% or more and 0.5 mass% or less. The control of the boron content within this range can achieve an effect of significantly improving the storage durability by 10% or more, while suppressing the decrease in discharge capacity.

In addition, B-containing graphite having a graphite interlayer distance of 3.348 angstrom or more and 3.352 angstrom or less is used as the negative electrode active material. The use of B-containing graphite having an interlayer distance within this range can achieve an effect of significantly improving the storage durability by 21% or more. Herein, the interlayer distance is a value in a completely discharged state.

As described later, graphite has a layered structure in which hexagonal network layers composed of carbon atoms are regularly stacked, and the interlayer distance thereof is calculated as spacing d₀₀₂ of the (002) plane measured by an X-ray diffraction method. Specifically, a negative electrode active material powder is subjected to X-ray diffraction measurement, and the angle θ of a diffraction peak corresponding to the (002) plane of graphite is measured. The spacing d₀₀₂ is determined by substituting the wavelength λ of the X-ray used in the measurement for the Bragg's equation 2d sinθ = λ. The measurement may use any X-ray, and Cu-Kα-ray can be used with high accuracy and simply. When Cu-Kα-ray is used, the use of only Cu-Kα₁-ray (λ = 1.5405 angstrom) by removing Cu-Kβ-ray and Cu-Kα₂-ray with a nickel X-ray filter or monochromator is useful for increasing the measurement accuracy.

The method of synthesizing the negative electrode active material includes, for example, the following procedure.

A boron raw material is added to and mixed with a carbon precursor material as a raw material, and the mixture is fired in an inert gas atmosphere at about 2100°C to 3000°C to promote the graphitization and solid dissolution of the boron into the carbon skeleton. On this occasion, the average discharge potential based on Li can be arbitrarily controlled by controlling the firing temperature, firing atmosphere, firing pressure, and so on. The firing atmosphere in the graphitization process can desirably use an inert gas, such as nitrogen or argon.

Graphite is a generic name of carbon materials including a region having a structure in which hexagonal network layers composed of carbon atoms are regularly stacked, and examples thereof include natural graphite, artificial graphite, and graphitized mesophase carbon particles. The spacing (the spacing between a carbon layer and another carbon layer) d₀₀₂ of the (002) plane measured by an X-ray diffraction method is used as an index showing the degree of growth of the graphite-type crystal structure. In general, high crystalline carbon having a spacing d₀₀₂ of 3.4 angstrom or less and a crystallite size of 100 angstrom or more is defined as graphite. In B-containing graphite, higher solid solubility of boron tends to shorten the distance d₀₀₂ between hexagonal network layers.

The carbon precursor material can be soft carbon, such as petroleum coke and coal coke. The soft carbon may have, for example, a sheet, fiber, or particle shape. Considering the processing after firing, the soft carbon is desirably a particulate or short fibrous synthetic resin having a size of several to several tens of micrometers. Alternatively, the carbon as a raw material can be obtained by treating an organic material, such as a synthetic resin, with heat of about 800°C to 1000°C to evaporate elements other than carbon.

Examples of the boron raw material to be desirably used include boron simple substance, boric acid, boron oxide, boron nitride, and diborides such as aluminum diboride and magnesium diboride. In high-temperature firing, a part of boron may scatter without being incorporated into the carbon material. Accordingly, the amount of boron included in the carbon material after the firing may be decreased compared to that before the firing. The boron raw material may be added after the graphitization treatment of carbon.

In addition, the boron raw material may be added after the graphitization treatment of carbon. That is, the negative electrode active material of the embodiment can also be obtained by adding the boron raw material to a graphitized material, firing the mixture again at about 2100°C to 3000°C, and then performing heat treatment again in an inert gas atmosphere at about 2300°C to 3000°C.

An example of the nonaqueous secondary battery including the negative electrode active material will now be described.

The nonaqueous secondary battery includes a positive electrode, a negative electrode, and a nonaqueous electrolyte solution.

The positive electrode includes a positive electrode active material that can occlude and release alkali metal ions. The negative electrode includes a negative electrode active material, and the negative electrode active material includes graphite containing boron and satisfying the above-described conditions of the crystallite size Lc. The nonaqueous electrolyte solution includes an alkali metal salt composed of an alkali metal ion and an anion in a state of being dissolved in a nonaqueous solvent. The nonaqueous solvent includes, for example, a chain carboxylic acid ester having one or more fluorine groups. The alkali metal ion may be a lithium ion.

This structure of the nonaqueous secondary battery can achieve a battery having a high energy density and high reliability.

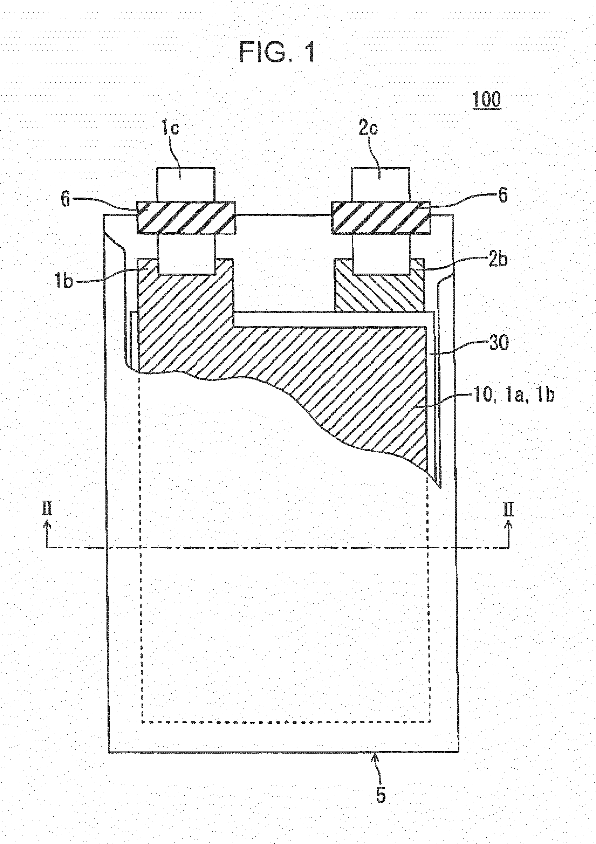

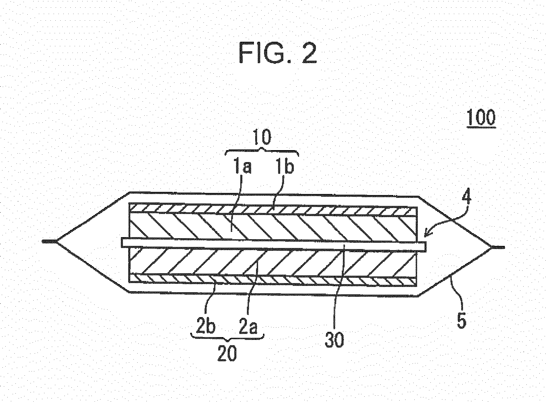

A lithium ion secondary battery will now be described as an example of the nonaqueous secondary battery according to an embodiment of the present disclosure with referring to Figs. 1 and 2. Fig. 1 is a partially cut plan view schematically illustrating an example of the structure of a nonaqueous secondary battery. Fig. 2 is a cross-sectional view taken along the line II-II in Fig. 1. The nonaqueous secondary battery is also called a lithium ion secondary battery.

As shown in Figs. 1 and 2, the lithium ion secondary battery 100 is a sheet-type battery and includes an electrode plate group 4 and an outer packaging case 5 accommodating the electrode plate group 4.

The electrode plate group 4 has a structure composed of a positive electrode 10, a separator 30, and a negative electrode 20 stacked in this order. The positive electrode 10 and the negative electrode 20 face each other with the separator 30 therebetween to form the electrode plate group 4. The electrode plate group 4 is impregnated with a nonaqueous electrolyte solution (not shown).

The positive electrode 10 includes a positive electrode mixture layer 1a and a positive electrode collector 1b. The positive electrode mixture layer 1a is disposed on the positive electrode collector 1b.

The negative electrode 20 includes a negative electrode mixture layer 2a and a negative electrode collector 2b. The negative electrode mixture layer 2a is disposed on the negative electrode collector 2b.

The positive electrode collector 1b is connected to a positive electrode tab lead 1c, and the negative electrode collector 2b is connected to a negative electrode tab lead 2c. The positive electrode tab lead 1c and the negative electrode tab lead 2c each extend to the outside of the outer packaging case 5.

The positive electrode tab lead 1c and the outer packaging case 5 are insulated from each other by an insulation tab film 6, and the negative electrode tab lead 2c and the outer packaging case 5 are insulated from each other by an insulation tab film 6.

The positive electrode mixture layer 1a includes a positive electrode active material that can occlude and release alkali metal ions. The positive electrode mixture layer 1a may optionally include a conduction assistant, an ion conductor, and a binder. As the positive electrode active material, the conduction assistant, the ion conductor, and the binder, known materials can be used without specific limitations.

The positive electrode active material may be any material that occludes and releases one or more alkali metal ions, and may be, for example, an alkali metal-containing transition metal oxide, transition metal fluoride, polyanionic material, fluorinated polyanionic material, or transition metal sulfide. The positive electrode active material may be, for example, a lithium-containing transition metal oxide, such as LiₓMe_{y}O₂ and Li₁₊ₓMe_{y}O₃ (where, 0 < x ≤ 1, 0.95 ≤ y < 1.05, Me includes at least one selected from the group consisting of Co, Ni, Mn, Fe, Cr, Cu, Mo, Ti, and Sn); a lithium-containing polyanionic material, such as LiₓMe_{y}PO₄ and LiₓMe_{y}P₂O₇ (where, 0 < x ≤ 1, 0.95 ≤ y < 1.05, Me includes at least one selected from the group consisting of Co, Ni, Mn, Fe, Cu, and Mo); or a sodium-containing transition metal oxide, such as NaₓMe_{y}O₂ (where, 0 < x ≤ 1, 0.95 ≤ y < 1.05, Me is at least one selected from the group consisting of Co, Ni, Mn, Fe, Cr, Cu, Mo, Ti, and Sn).

The positive electrode collector 1b can be a sheet or film made of a metal material. The metal material may be, for example, aluminum, an aluminum alloy, stainless steel, nickel, or a nickel alloy. The sheet or film may be porous or may be non-porous. Aluminum and alloys thereof are inexpensive and can be easily formed into a thin film and are therefore desirable as materials of the positive electrode collector 1b. The surface of the positive electrode collector 1b may be coated with a carbon material, such as carbon, for, for example, decreasing the resistance value, giving a catalytic effect, and strengthening the bond between the positive electrode mixture layer 1a and the positive electrode collector 1b.

The negative electrode mixture layer 2a includes, as a negative electrode active material, a graphite material containing boron of the embodiment at least on the surface. The negative electrode mixture layer 2a may optionally further include another negative electrode active material that can occlude and release alkali metal ions. The negative electrode mixture layer 2a may optionally include a conduction assistant, an ion conductor, and a binder. As the active material, the conduction assistant, the ion conductor, and the binder, known materials can be used without specific limitations.

The negative electrode active material that can be used together with the negative electrode active material of the embodiment can be, for example, a material occluding and releasing alkali metal ions or an alkali metal. Examples of the material occluding and releasing alkali metal ions include alkali metal alloys, carbons, transition metal oxides, and silicon materials. Specifically, as the negative electrode material of a lithium secondary battery, for example, alloys of a metal, such as Zn, Sn, and Si, and lithium; carbons, such as artificial graphite, natural graphite, and hardly graphitizable amorphous carbon; transition metal oxides, such as Li₄Ti₅O₁₂, TiO₂, and V₂O₅; SiOx (0 < x ≤ 2); and lithium metal can be used.

As the conduction assistant, for example, carbon materials, such as carbon black, graphite, and acetylene black; and conductive polymers, such as polyaniline, polypyrrole, and polythiophene can be desirably used. As the ion conductor, for example, gel electrolytes, such as polymethyl methacrylate; and solid electrolytes, such as polyethylene oxide, lithium phosphate, and lithium phosphate oxynitride (LiPON) can be used. As the binder, for example, polyvinylidene fluoride, vinylidene fluoride-hexafluoropropylene copolymer, vinylidene fluoride-tetrafluoroethylene copolymer, polytetrafluoroethylene, carboxymethyl cellulose, polyacrylic acid, styrene-butadiene copolymer rubber, polypropylene, polyethylene, and polyimide can be used.

The negative electrode collector 2b can be a sheet or film made of a metal material. The metal material may be, for example, aluminum, an aluminum alloy, stainless steel, nickel, a nickel alloy, copper, or a copper alloy. The sheet or film may be porous or may be non-porous. Copper and copper alloys are stable also at the operation potential of the negative electrode and are relatively inexpensive and are therefore desirable as materials of the negative electrode collector 2b. As the sheet or film, for example, metal foil or metal mesh is used. The surface of the negative electrode collector 2b may be coated with a carbon material, such as carbon, for, for example, decreasing the resistance value, giving a catalytic effect, and strengthening the bond between the negative electrode mixture layer 2a and the negative electrode collector 2b.

The separator 30 is a porous film made of, for example, polyethylene, polypropylene, glass, cellulose, or a ceramic material. The pores of the separator 30 are impregnated with a nonaqueous electrolyte solution.

The nonaqueous electrolyte solution consists of an alkali metal salt dissolved in a nonaqueous solvent. As the nonaqueous solvent, a known solvent, such as a cyclic carbonic acid ester, a chain carbonic acid ester, a cyclic carboxylic acid ester, a chain carboxylic acid ester, a chain nitrile, a cyclic ether, and a chain ether, can be used. From the viewpoint of the solubility of a Li salt and the viscosity, the nonaqueous electrolyte solution desirably includes a cyclic carbonic acid ester and a chain carbonic acid ester.

As the cyclic carbonic acid ester, for example, ethylene carbonate, fluoroethylene carbonate, propylene carbonate, butylene carbonate, vinylene carbonate, vinylethylene carbonate, and derivatives thereof can be used. These esters may be used alone or in combination of two or more thereof. From the viewpoint of the ionic conductivity of the electrolyte solution, it is desirable to use at least one selected from the group consisting of ethylene carbonate, fluoroethylene carbonate, and propylene carbonate.

As the chain carbonic acid ester, for example, dimethyl carbonate, ethyl methyl carbonate, and diethyl carbonate can be used. These esters may be used alone or in combination of two or more thereof.

As the cyclic carboxylic acid ester, for example, γ-butyrolactone and γ-valerolactone can be used. These esters may be used alone or in combination of two or more thereof.

As the chain carboxylic acid ester, for example, methyl acetate, ethyl acetate, propyl acetate, methyl propionate, ethyl propionate, and propyl propionate can be used. These esters may be used alone or in combination of two or more thereof.

As the chain nitrile, for example, acetonitrile, propionitrile, butyronitrile, valeronitrile, isobutyronitrile, and pivalonitrile can be used. These nitriles may be used alone or in combination of two or more thereof.

As the cyclic ether, for example, 1,3-dioxolane, 1,4-dioxolane, tetrahydrofuran, and 2-methyltetrahydrofuran can be used. These ethers may be used alone or in combination of two or more thereof.

As the chain ether, for example, 1,2-dimethoxyethane, dimethyl ether, diethyl ether, dipropyl ether, ethyl methyl ether, diethylene glycol dimethyl ether, diethylene glycol diethyl ether, and diethylene glycol dibutyl ether can be used.

These ethers may be used alone or in combination of two or more thereof.

These solvents may be fluorinated solvents in which a part of hydrogen atoms are appropriately substituted with fluorine.

As the alkali metal salt to be dissolved in the nonaqueous solvent, for example, lithium salts, such as LiClO₄, LiBF₄, LiPF₆, LiN(SO₂F)₂, LiN(SO₂CF₃)₂, and lithium bis(oxalate)borate (LiBOB); and sodium salts, such as NaClO₄, NaBF₄, NaPF₆, NaN(SO₂F)₂, and NaN(SO₂CF₃)₂ can be used. In particular, from the viewpoint of the overall characteristics of a nonaqueous electrolyte solution secondary battery, a lithium salt is desirably used. From the viewpoint of, for example, ionic conductivity, it is particularly desirable to use at least one selected from LiBF₄, LiPF₆, and LiN(SO₂F)₂.

The molar content of the alkali metal salt in the nonaqueous electrolyte solution according to the embodiment is not particularly limited and is desirably 0.5 mol/L or more and 2.0 mol/L or less. It has been reported that a high salt concentration electrolyte solution having a molar ratio of the alkali metal salt to a solvent of 1:1 to 1:4 can also be charged and discharged as in ordinary electrolyte solutions, and the electrolyte solution may be such a high concentration electrolyte solution.

The type (shape) of a secondary battery is not limited to a sheet type as shown in Figs. 1 and 2 and is, for example, a coin type, a button type, a laminate type, a cylinder type, a flat type, or a square type. The nonaqueous secondary battery of the embodiment can be applied to any shape of a nonaqueous secondary battery. The secondary battery of the embodiment can be used in, for example, a mobile information terminal, portable electronic equipment, a domestic power storage device, an industrial power storage device, a motorcycle, an EV, or a PHEV, but the use of the secondary battery is not limited thereto.

Embodiments of the present disclosure will now be further described based on examples.

### Illustrative Example 1* (*outside the scope of the claims)

### (1) Synthesis of negative electrode active material

A boric acid raw material (CAS No. 10043-35-3) was added to a petroleum coke powder having an average particle diameter of 12 µm, and the mixture was pulverized and mixed with an agate mortar. Herein, the amount of the boron raw material was 10 mass% based on the amount of the petroleum coke powder. The rate of boron to the petroleum coke powder was 1.7 mass%. The mixture was then fired at 2800°C in an Atchison furnace. The resulting carbon material was further pulverized with an agate mortar and was classified by a stainless steel standard sieve having an aperture of 40 µm. Thus, a nonaqueous secondary battery negative electrode active material was obtained.

The boron content of graphite in the resulting negative electrode active material measured by inductively coupled plasma (ICP) emission spectroscopy was 0.33 mass%.

The spacing d₀₀₂ of graphite determined by X-ray diffraction measurement was 3.353 angstrom.

### (2) Production of test electrode

The nonaqueous secondary battery negative electrode active material synthesized by the above-described method, carboxymethyl cellulose (CAS No. 9000-11-7), and a styrene-butadiene copolymer rubber (CAS No. 9003-55-8) were weighed at a weight ratio of 97:2:1 and were dispersed in pure water to prepare a slurry. The slurry was then applied at a thickness of 10 µm onto a negative electrode collector 2b of copper foil with a coater. The coating film was rolled with a roller to obtain an electrode plate.

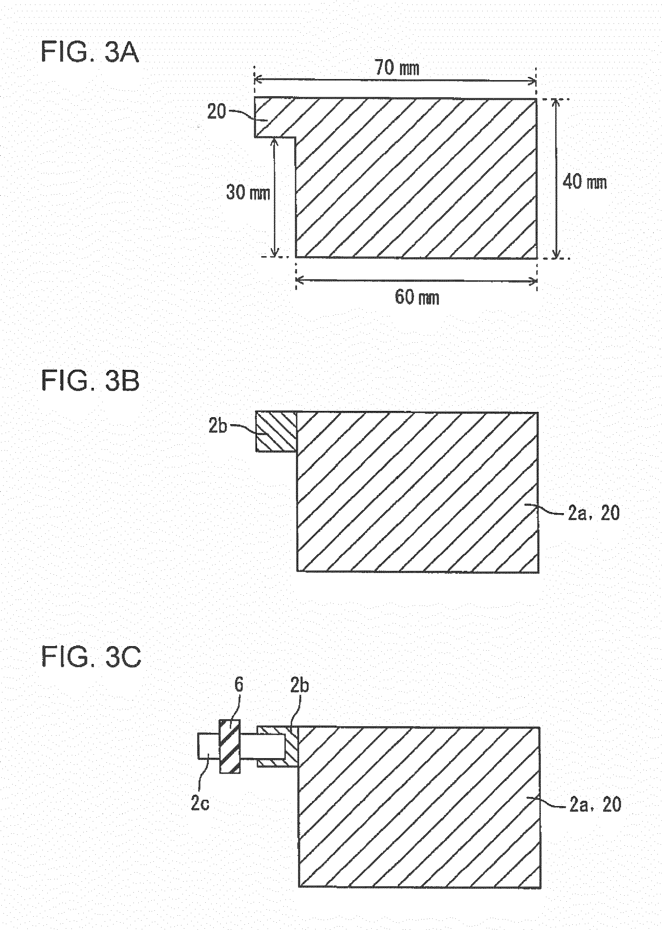

The rolled electrode plate was then cut into the shape shown in Fig. 3A to prepare a negative electrode 20 for performance evaluation. In Fig. 3A, the region of 60 mm × 40 mm functions as a negative electrode, and the protruding portion of 10 mm × 10 mm is a connection region with a tab lead 2c. Furthermore, as shown in Fig. 3B, the negative electrode mixture layer 2a formed on the connection region was then scraped to expose the negative electrode collector (copper foil) 2b. As shown in Fig. 3C, the exposed portion of the negative electrode collector (copper foil) 2b was then connected to a negative electrode tab lead 2c, and a predetermined circumferential region of the negative electrode tab lead 2c was covered with an insulation tab film 6.

### (3) Preparation of nonaqueous electrolyte solution

LiPF₆ (CAS No. 21324-40-3) was dissolved at a concentration of 1.2 mol/L in a solvent mixture of fluoroethylene carbonate (CAS No. 114435-02-8) and dimethyl carbonate (CAS No. 616-38-6) at a volume ratio of 1:4 to prepare an electrolyte solution. The preparation of the electrolyte solution was performed in a glove box under an argon atmosphere with a dew point of -60°C or less and an oxygen value of 1 ppm or less.

### (4) Production of evaluation cell

A half-cell for negative electrode evaluation including lithium metal as the counter electrode was produced using the negative electrode for performance evaluation. The production of the evaluation cell was performed in a glove box under an argon atmosphere with a dew point of -60°C or less and an oxygen value of 1 ppm or less.

The negative electrode for performance evaluation equipped with a negative electrode tab lead 2c and the Li metal counter electrode equipped with a nickel tab lead 1c were disposed such that the electrodes just faced each other with a polypropylene separator 30 (thickness: 30 µm) therebetween to prepare an electrode plate group 4.

An Al laminate film (thickness: 100 µm) cut into a square of 120 × 120 mm was folded in half, and the end on the long side of 120 mm was thermally sealed at 230°C to form a tube of 120 × 60 mm. The produced electrode plate group 4 was then placed in the tube from one short side of 60 mm. The positions of the end face of the Al laminate film and the thermal welding resin of the tab leads 1c and 2c were adjusted, followed by thermal sealing at 230°C. A nonaqueous electrolyte solution (0.3 cm³) was then poured into the Al laminate film tube from the short side not thermally sealed, followed by being left to stand under a reduced pressure of 0.06 MPa for 15 minutes to impregnate the negative electrode mixture layer 2a with the electrolyte solution. Finally, the end face of the Al laminate film from which the electrolyte solution was poured was thermally sealed at 230°C.

### (5) Evaluation of battery

The evaluation cell produced as in above was pressurized and fixed with cramps at 0.2 MPa such that the electrode plate group 4 was sandwiched with stainless steel (thickness: 2 mm) of 80 × 80 cm through the laminate film. All evaluation was performed in a thermostatic chamber of 25°C.

Charge and discharge were repeated 4 cycles while restricting the current flowing during charge and discharge such that the current density per mass of the negative electrode active material was 20 mA. The charge was terminated at a negative electrode potential of 0.0 V (based on Li counter electrode), and the discharge was terminated at a negative electrode potential of 1.0 V (based on Li counter electrode). The battery was left to stand at open circuit for 20 minutes between charge and discharge.

Subsequently, charge and discharge were further performed one cycle under the same conditions, and the average discharge potential [V] was calculated by dividing the discharge electric energy quantity [Wh] by the discharge electricity quantity [Ah] in the fifth cycle. The negative electrode active material of Illustrative Example 1 had an average discharge potential of 0.167 V.

### (6) Production of nonaqueous secondary battery

Li(Ni,Co,Al)O₂ as a positive electrode active material, acetylene black as a conduction assistant, and polyvinylidene fluoride as a binding agent were weighed at a weight ratio of 8:1:1. The resulting mixture was dispersed in an NMP solvent to prepare a slurry. The slurry was then applied onto an Al collector 1b with a coater. The coating film was rolled with a roller to obtain an electrode plate. The electrode plate was processed by the same method as that shown in Figs. 3A to 3C showing a method for processing a negative electrode to obtain a positive electrode 10.

This positive electrode 10 and a negative electrode for performance evaluation were combined to produce a nonaqueous secondary battery cell. The production of the nonaqueous secondary battery cell was performed in a glove box under an argon atmosphere of a dew point of -60°C or less and an oxygen value of 1 ppm or less.

The negative electrode for performance evaluation equipped with a negative electrode tab lead 2c and the positive electrode 10 equipped with a nickel tab lead 1c were disposed such that the electrodes just faced each other with a polypropylene separator 30 (thickness: 30 µm) therebetween to prepare an electrode plate group 4.

Subsequently, an Al laminate film (thickness: 100 µm) cut into a square of 120 × 120 mm was folded in half, and the end on the long side of 120 mm was thermally sealed at 230°C to form a tube of 120 × 60 mm. The produced electrode plate group 4 was then placed in the tube from one short side of 60 mm. The positions of the end face of the Al laminate film and the thermal welding resin of the tab leads 1c and 2c were adjusted, followed by thermal sealing at 230°C. A nonaqueous electrolyte solution (0.3 cm³) was then poured into the Al laminate film tube from the short side not thermally sealed, followed by being left to stand under a reduced pressure of 0.06 MPa for 15 minutes to impregnate the negative electrode mixture layer 2a with the electrolyte solution. Finally, the end face of the Al laminate film from which the electrolyte solution was poured was thermally sealed at 230°C.

### (7) Evaluation of storage durability of nonaqueous secondary battery

Charge and discharge were repeated 4 cycles while restricting the current flowing during the charge and the discharge such that the current density per mass of the negative electrode active material was 20 mA. The charge was terminated at a battery voltage of 4.2 V, and the discharge was terminated at a battery voltage of 2.5 V. The battery was left to stand at open circuit for 20 minutes between charge and discharge.

The batter after the charge of the fifth cycle was subjected to a storage durability test in a thermostatic chamber of 55°C for one month. Subsequently, the battery after the test was discharged and charged for 2 cycles, and the battery after the discharge of the third cycle was disassembled to take out the negative electrode. The amount of the side reaction of the negative electrode was quantitatively analyzed by ICP emission spectroscopy of the negative electrode graphite. The amount of Li per weight of graphite determined by quantitative analysis of Li by ICP emission spectroscopy was defined as the side reaction amount.

### Example 2

A nonaqueous secondary battery negative electrode active material was synthesized as in Illustrative Example 1 except that the carbon material fired at 2800°C in an Atchison furnace was placed in a carbon crucible and was further subjected to heat treatment at 1900°C under an argon atmosphere. In the heat treatment, in order to avoid excessive sublimation of boron from the negative electrode active material, the carbon crucible was fired together with large amounts of boron and carbon in advance so as to be saturated with boron.

The boron content of graphite in the resulting negative electrode active material measured by ICP emission spectroscopy was 0.36 mass%.

The average discharge potential based on Li was 0.173 V.

The graphite interlayer distance measured by X-ray diffraction measurement was 3.352 angstrom.

### Example 3

A nonaqueous secondary battery negative electrode active material was synthesized as in Example 2 except that the temperature of re-firing under an argon atmosphere was 2300°C.

The boron content of graphite in the negative electrode active material measured by ICP emission spectroscopy was 0.29 mass%.

The average discharge potential based on Li was 0.180 V.

The graphite interlayer distance measured by X-ray diffraction measurement was 3.352 angstrom.

### Example 4

A nonaqueous secondary battery negative electrode active material was synthesized as in Example 2 except that the temperature of re-firing under an argon atmosphere was 2800°C.

The boron content of graphite in the negative electrode active material measured by ICP emission spectroscopy was 0.36 mass%.

The average discharge potential based on Li was 0.183 V.

The graphite interlayer distance measured by X-ray diffraction measurement was 3.351 angstrom.

### Example 5

A nonaqueous secondary battery negative electrode active material was synthesized as in Example 3 except that the amount of the boron raw material added at the time of firing graphite was 20 mass% based on the amount of the petroleum coke powder. The rate of boron to the petroleum coke powder was 3.4 mass%.

The boron content of graphite in the negative electrode active material measured by ICP emission spectroscopy was 0.42 mass%.

The average discharge potential based on Li was 0.188 V.

The graphite interlayer distance measured by X-ray diffraction measurement was 3.352 angstrom.

### Example 6

A nonaqueous secondary battery negative electrode active material was synthesized as in Example 5 except that the temperature of re-firing under an argon atmosphere was 2800°C.

The boron content of graphite in the negative electrode active material measured by ICP emission spectroscopy was 0.39 mass%.

The average discharge potential based on Li was 0.191 V.

The graphite interlayer distance measured by X-ray diffraction measurement was 3.348 angstrom.

### Example 7

A nonaqueous secondary battery negative electrode active material was synthesized as in Example 5 except that the re-firing under an argon atmosphere was performed under a high firing pressure of 0.2 GPa instead of the atmospheric pressure.

The boron content of graphite in the negative electrode active material measured by ICP emission spectroscopy was 0.50 mass%.

The average discharge potential based on Li was 0.197 V.

The graphite interlayer distance measured by X-ray diffraction measurement was 3.349 angstrom.

### Comparative Example 1

A nonaqueous secondary battery negative electrode active material was synthesized as in Illustrative Example 1 except that the boron raw material was not added at the time of firing at 2800°C in an Atchison furnace.

The boron content of graphite in the negative electrode active material was measured by ICP emission spectroscopy, and boron was not detected.

The average discharge potential based on Li was 0.148 V.

The graphite interlayer distance measured by X-ray diffraction measurement was 3.356 angstrom.

### Comparative Example 2

A nonaqueous secondary battery negative electrode active material was synthesized as in Example 3 except that the amount of the boron raw material added at the time of firing graphite was 1 mass% based on the amount of the petroleum coke powder. The rate of boron to the petroleum coke powder was 0.17 mass%.

The boron content of graphite in the negative electrode active material measured by ICP emission spectroscopy was 0.03 mass%.

The average discharge potential based on Li was 0.154 V.

The graphite interlayer distance measured by X-ray diffraction measurement was 3.355 angstrom.

Nonaqueous secondary batteries were produced as in Illustrative Example 1 using the negative electrode active materials of Examples 2 to 7 and Comparative Examples 1 and 2, and the side reaction amounts after the storage durability test were evaluated as in Illustrative Example 1. The results are shown in Table 1, where the side reaction amounts are each shown as a side reaction decreasing rate expressing a rate (percentage) of the decreased side reaction amount compared to the side reaction amount in Comparative Example 1 to the side reaction amount in Comparative Example 1.

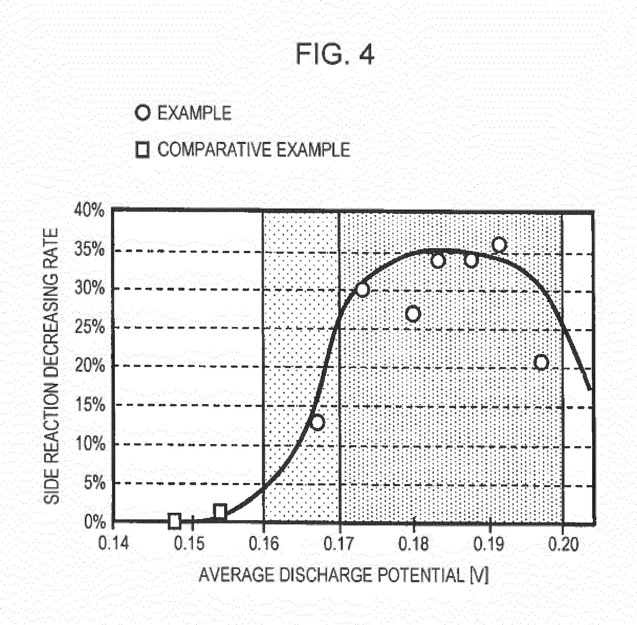

Fig. 4 shows the results in Table 1 as a graph showing a relationship between the average discharge potential based on Li and the side reaction decreasing rate.

As obvious from Table 1 and Fig. 4, in the battery of Comparative Example 2 using a negative electrode active material including 0.03 mass% of boron, the side reaction-suppressing effect was slight, and the side reaction amount was almost the same as that in Comparative Example 1 using a negative electrode active material not including boron. This is probably caused by that the average discharge potential of the negative electrode active material used in Comparative Example 2 was 0.154 V, which was higher than 0.148 V in Comparative Example 1, but was low and also that the graphite interlayer distance was 3.355 angstrom or more. It is demonstrated that a boron content of 0.03 mass% or less is insufficient for achieving a side reaction-suppressing effect.

In contrast, in batteries using the negative electrode active materials of Illustrative Example 1 and Examples 2 to 7, a significant decrease of the side reaction, a decrease of 13% or more compared to Comparative Example 1, was observed. This is probably caused by that the negative electrode active materials used in Illustrative Example 1 and Examples 2 to 7 had an average discharge potential of 0.167 V or more and 0.197 or less and also that the graphite interlayer distance was shorter than 3.355 angstrom (specifically, 3.353 angstrom or less).

Referring to Fig. 4 based on the results described above, it is suggested that there are thresholds for expressing a side reaction-suppressing effect at average discharge potentials of about 0.16 V and about 0.20 V based on Li. Similarly, in B-containing graphite having an interlayer distance of 3.348 angstrom or more and less than 3.355 angstrom, a significant decrease of the side reaction was observed, which suggests that a range of 3.348 angstrom or more and less than 3.355 angstrom is a desirable range of the interlayer distance for expressing a side reaction-suppressing effect.

Furthermore, in batteries using the negative electrode active materials of Examples 2 to 6, a significant decrease of the side reaction, a decrease of 27% or more compared to Comparative Example 1, was observed. This is probably caused by that the negative electrode active materials used in Examples 2 to 6 had an average discharge potential of 0.173 V or more and also that the graphite interlayer distance was 3.352 angstrom or less. Considering Fig. 4 based on the results, it is suggested that there is a threshold for expressing a higher effect of suppressing a side reaction at an average discharge potential of about 0.17 V based on Li. Similarly, in B-containing graphite having an interlayer distance of 3.348 angstrom or more and less than 3.352 angstrom, a significant decrease of the side reaction was observed, which suggests that a range of 3.352 angstrom or more and less than 3.353 angstrom is a more desirable range of the interlayer distance for expressing a side reaction-suppressing effect.

In Illustrative Example 1 and Examples 2 to 7, the boron contents in the negative electrode active materials (B-containing graphite) were 0.29 mass% to 0.50 mass%, and excellent storage stability was observed compared to the negative electrode active materials of Comparative Examples 1 and 2 having a boron content of 0 to 0.03 mass%. Table 1 demonstrates that the side reaction decreasing rate tends to increase with an increase in the boron content. However, the side reaction decreasing rate is not necessarily increased with an increase of the boron content. Even if the boron content is within an appropriate range, boron is not solid-dissolved in graphite depending on the firing atmospheric gas, temperature, pressure and so on, and there is a risk that a desired effect of suppressing a side reaction is not obtained.

In the negative electrode active material of Example 7, the boron content was higher than that in Example 6, and the side reaction decreasing rate was limited to 21%, which was a significant decrease in the side reaction compared to Comparative Example 1, but was an increase of the side reaction amount when compared to Example 6. This is probably caused by that the interlayer distance of the B-containing graphite in Example 7 was 3.349 angstrom, which was longer than 3.348 angstrom in Example 6, and thereby boron was not sufficiently solid-dissolved in graphite. There is a risk that the presence of boron in a solid undissolved state (for example, presence as a by-product) cancels out the side reaction-suppressing effect achieved by an increase in the average discharge potential.

An increase in the boron content of a negative electrode active material causes a risk that a part of boron cannot be solid-dissolved in graphite and is present between hexagonal network layers without substituting for carbon constituting the graphite skeleton or is present as a by-product, such as boron carbide (B₄C). In such a case, the generation of the by-product may decrease the volume of the negative electrode active material and also may decrease the side reaction-suppressing effect by the elimination of boron in graphite.

However, also in the negative electrode active material of Example 7, the solid solubility of boron in graphite can be increased by controlling, for example, the firing atmospheric gas, temperature, and pressure. Consequently, it is possible to achieve a side reaction decreasing rate equivalent to or higher than that in Example 6. Thus, boron is desirably included in graphite in a solid solution state.

As described above, in negative electrode active materials having an average discharge potential of 0.16 V or more and 0.2 V or less based on Li, an effect of significantly improving the storage durability (i.e., side reaction-suppressing effect), an improvement of 10% or more, was observed. The boron content in such a negative electrode active material was 0.29 mass% or more and 0.5 mass% or less. In negative electrode active materials having an average discharge potential of 0.17 V or more and 0.2 V or less based on Li, an effect of significantly improving the storage durability (suppression of side reactions) by 21% or more was observed. The boron content in such a negative electrode active material was 0.29 mass% or more and 0.5 mass% or less. In the latter case, a decrease of the side reaction of 27% or more can be expected by controlling the conditions in the synthesis of B-containing graphite and enhancing the solid solubility of boron.

**[Table 1]**

| | Boron content [mass%] | Average discharge potential [V] | Interlayer distance [angstrom] | Side reaction decreasing rate [%] |
|---|---|---|---|---|
| Illustrative Example 1* | 0.33 | 0.167 | 3.353 | 13% |
| Example 2 | 0.36 | 0.173 | 3.352 | 30% |
| Example 3 | 0.29 | 0.180 | 3.352 | 27% |
| Example 4 | 0.36 | 0.183 | 3.351 | 34% |
| Example 5 | 0.42 | 0.188 | 3.352 | 34% |
| Example 6 | 0.39 | 0.191 | 3.348 | 36% |
| Example 7 | 0.50 | 0.197 | 3.349 | 21% |
| Comparative Example 1 | 0.00 | 0.148 | 3.356 | 0% |
| Comparative Example 2 | 0.03 | 0.154 | 3.355 | 1% |

| | | | | |
|---|---|---|---|---|
| * outside the scope of the claims | | | | |

The nonaqueous secondary battery negative electrode active material according to the present disclosure can be used in a nonaqueous secondary battery and is particularly useful as a negative electrode material of a nonaqueous secondary battery, such as a lithium ion secondary battery.

## Claims

1. A negative electrode active material for a nonaqueous secondary battery, comprising graphite containing boron, wherein
the graphite has an average discharge potential of 0.16 V or more and 0.2 V or less, based on Li,
wherein the graphite contains boron in an amount of greater than 0.03 mass% and not greater than 1 mass%; and
wherein the graphite has an interlayer distance of 3.348 angstrom or more and 3.352 angstrom or less.

2. The negative electrode active material according to claim 1, wherein the graphite contains boron in an amount of 0.29 mass% or more and 0.5 mass% or less.

3. The negative electrode active material according to claim 1 or 2, wherein the graphite contains boron in a solid solution state.

4. A nonaqueous secondary battery comprising:
a positive electrode including a positive electrode active material capable of occluding and releasing an alkali metal ion;
a negative electrode including a negative electrode active material according to any one of claims 1 to 3; and
a nonaqueous electrolyte solution.

5. The nonaqueous secondary battery according to claim 4, wherein the alkali metal ions is a lithium ion.

6. The nonaqueous secondary battery according to claim 4 or 5, wherein the nonaqueous electrolyte solution includes a nonaqueous solvent including a chain carboxylic acid ester having one or more fluorine groups.

## Patentansprüche

1. Negativelektrodenaktivmaterial für eine nichtwässrige Sekundärbatterie, umfassend Grafit, welcher Bor enthält, wobei
der Grafit ein mittleres Entladungspotential von 0,16 V oder mehr und 0,2 V oder weniger, bezogen auf Li, aufweist,
wobei der Grafit Bor in einer Menge von mehr als 0,03 Masse-% und nicht mehr als 1 Masse-% enthält und
wobei der Grafit einen Zwischenschichtabstand von 3,348 Angström oder mehr und 3,352 Angström oder weniger aufweist.

2. Negativelektrodenaktivmaterial gemäß Anspruch 1, wobei der Grafit Bor in einer Menge von 0,29 Masse-% oder mehr und 0,5 Masse-% oder weniger enthält.

3. Negativelektrodenaktivmaterial gemäß Anspruch 1 oder 2, wobei der Grafit Bor in einem festen Lösungszustand enthält.

4. Nichtwässrige Sekundärbatterie, umfassend:
eine positive Elektrode, die ein Positivelektrodenaktivmaterial einschließt, das ein Alkalimetallion okkkludieren und freisetzen kann;
eine negative Elektrode, die ein Negativelektrodenaktivmaterial gemäß einem der Ansprüche 1 bis 3 einschließt, und
eine nichtwässrige Elektrolytlösung.

5. Nichtwässrige Sekundärbatterie gemäß Anspruch 4, wobei es sich bei den Alkalimetallionen um ein Lithiumion handelt.

6. Nichtwässrige Sekundärbatterie gemäß Anspruch 4 oder 5, wobei die nichtwässrige Elektrolytlösung ein nichtwässriges Lösungsmittel einschließt, das einen kettenförmigen Carbonsäureester mit einer oder mehreren Fluorgruppen einschließt.

## Revendications

1. Matériau actif d'électrode négative pour une batterie secondaire non aqueuse, comprenant du graphite contenant du bore, dans lequel
le graphite a un potentiel de décharge moyen supérieur ou égal à 0,16 V et inférieur ou égal à 0,2 V, sur la base de Li,
dans lequel le graphite contient du bore en une quantité supérieure à 0,03% en masse et non supérieure à 1% en masse ; et
dans lequel le graphite a une distance intercouche supérieure ou égale 3,348 angström et inférieure ou égale à 3,352 angström.

2. Matériau actif d'électrode négative selon la revendication 1, dans lequel le graphite contient du bore en une quantité supérieure ou égale à 0,29% en masse et inférieure ou égale à 0,5% en masse.

3. Matériau actif d'électrode négative selon la revendication 1 ou 2, dans lequel le graphite contient du bore à l'état de solution solide.

4. Batterie secondaire non aqueuse comprenant :
une électrode positive comprenant un matériau actif d'électrode positive capable d'occlure et de libérer un ion de métal alcalin ;
une électrode négative comprenant un matériau actif d'électrode négative selon l'une quelconque des revendications 1 à 3 ; et
une solution électrolytique non aqueuse.

5. Batterie secondaire non aqueuse selon la revendication 4, dans laquelle l'ion alcalin est un ion lithium.

6. Batterie secondaire non aqueuse selon la revendication 4 ou 5, dans laquelle la solution électrolytique non aqueuse comprend un solvant non aqueux comprenant un ester d'acide carboxylique à chaîne ayant un ou plusieurs groupes fluor.
